# EUROPEAN PATENT APPLICATION

(11) **EP 3 605 146 A1**
(43) Date of publication of application: **05.02.2020**
(21) Application number: 18774813.2
(22) Date of filing: 14.03.2018
(51) Int. Cl.: G01S 15/93

(54) **HOSTLESS PARKING RADAR SYSTEM**

(30) Priority: 27.03.2017 CN 201710189257
(71) Applicant: Xiamen Autostar Electronics Co., Ltd., Xiamen, Fujian 361100 (CN)
(72) Inventor: LI, Xinsheng, Xiamen Fujian 361100 (CN); CHEN, Wuqiang, Xiamen Fujian 361100 (CN)
(74) Representative: Glück Kritzenberger Patentanwälte PartGmbB
(86) International application number: PCT/CN2018/079057
(87) International publication number: WO 2018/177123

(57) **Abstract**

The present invention discloses a hostless parking radar system, including a main sensor and a plurality of slave sensors arranged in parallel, wherein the main sensor includes a CPU module, a first digital pulse module, a first ultrasonic unit, and a plurality of digital pulse transmission modules arranged in parallel; the slave sensors include a second digital pulse module and a second ultrasonic unit; and the plurality of digital pulse transmission modules are respectively in communication with the first digital pulse module and the second digital pulse module by means of bidirectional transmission. In the present invention, the main sensor is provided with the CPU module, but none of the slave sensors has the CPU module, so that the cost of the system is greatly reduced. The main sensor communicates with the slave sensors by using digital pulse signals, so that the system works more reliably and stably.

## Description

### Field of the Invention

The present invention relates to a vehicle parking radar system, in particular to a hostless parking radar system.

### Background of the Invention

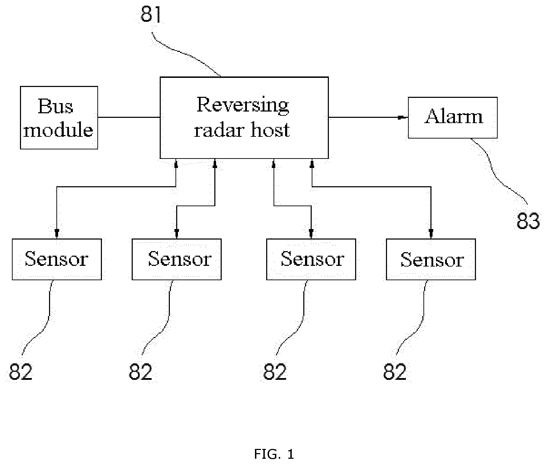

As shown in Fig. 1, a conventional parking radar system, also known as a reversing radar system, generally includes a host 81, a plurality of sensors 82 (also known as probes), and at least one alarm 83, the plurality of sensors 82 are respectively connected with the host 81 and cooperatively work under the control of the host 81, each sensor 82 detects an obstacle to obtain data and transmits the data to the host 81, the host 81 analyzes the data and judges the distance from the obstacle, and when the actual distance is relatively small and meets an alarm prompting condition, the host 81 drives a buzzer alarm 83 to perform an audible alarm prompt. Generally, the host 81 is installed in a vehicle body, the plurality of sensors 82 are arranged on the front and/or rear bumper of the vehicle, each of the sensors are arranged at certain distances, such that the signal transmission between the sensors 82 and the host 81 and power supply feeding and the like are very complicated, so that not only the cost of the wiring harness and the host 81 is increased, but also excessively long data lines are susceptible to interference.

In view of the above problems, people have developed hostless parking radar systems. The publication number CN1892249A provides a hostless parking radar system. As shown in Fig. 2, the system includes a main sensor 91 and one or more slave sensors 92, the main sensor 91 has an obstacle detection function and cooperatively controls the working time sequence of each slave sensor 92 and communicates with the same, and no host is arranged to eliminate the influence of the host. Meanwhile, the main sensor 91 and the slave sensors 92 are all arranged on the bumper, so that the length of a connecting line for the entire radar system can be shortened.

The publication number CN102129076A provides a hostless parking radar system of a serial structure. As shown in Fig. 3, the system has a plurality of sensors 71, a first terminal of each sensor is connected with a second terminal of the adjacent sensor through an internal network 72 to form the serial structure, and the information transfer among the sensors 71 is achieved. Each sensor 71 includes a CPU module (microprocessor), a communication module, an ultrasonic sensor, a driving and transmitting module, and an ultrasonic receiving module. The solution has the following advantages: first, the reaction speed of the system is improved; and second, the system can realize triangulation location measurement and calculation functions.

The publication number CN103592649A provides an integrated parking radar system. As shown in Fig. 4, the system includes a main sensor 50 and at least one slave sensor 60, the main sensor 50 includes a CPU module 51, a first ultrasonic sensor 52, a main driving module 53, a main amplification module 54 and at least one slave driving module, the CPU module is provided with a built-in A/D conversion module, the CPU module 51 drives the first ultrasonic sensor 52 through the main driving module 53, and the first ultrasonic sensor 52 amplifies and transmits a reflection analog signal to the A/D conversion module of the CPU module 51 through the main amplification module 54. Each slave sensor 60 is an analog sensor (analog probe) without a CPU, the CPU module of the main sensor drives a slave sensor 60 through a slave driving module, and each slave sensor 60 amplifies and transmits the reflection analog signal to the A/D conversion module of the CPU module of the main sensor. Since each slave sensor is the analog sensor, the system cost in the solution has an obvious advantage over a digital sensor (digital probe) with a CPU.

As described above, for the main sensor 91 and the slave sensors 92 in the hostless reversing radar system disclosed by the publication number CN1892249A, and the sensors 71 in the hostless parking radar system of the serial structure disclosed by the publication number CN102129076A, each sensor includes the CPU module (microprocessor), so the system cost is relatively high. In the integrated parking radar system disclosed by the publication number CN103592649A, the slave sensors are all analog sensors, thus reducing the cost of the system, but because the signals transmitted by the slave sensors are analog signals instead of non-digital pulse signals or digital signals, the analog signals are vulnerable to interference when being transmitted in a conducting wire, especially when the sensors are arranged on the front and rear bumpers of the vehicle, the main sensor and a part of slave sensors are more vulnerable to the interference of various electric devices due to the overlong transmission conducting wires from the front to the rear of the vehicle. Therefore, the anti-interference capability of the system in the solution is worse. Meanwhile, since the analog signals received by the sensors are processed by the A/D module of the CPU module, the following problems rise: first, because the processing efficiency of the A/D module is low, so it is not convenient for the system to realize the triangulation location and calculation function; and second, because the CPU with multiple-channel A/D modules needs to be selected, so the cost of the selected CPU is relatively high, resulting in a relatively high cost of the main sensor.

### Summary of the Invention

In view of the problems existing in the prior art, an objective of the invention is to provide a hostless parking radar system with improved structure, low cost, more reliable and stable work, and high efficiency.

In order to achieve the above object, the invention provides a hostless parking radar system, including a main sensor and a plurality of slave sensors arranged in parallel, wherein
the main sensor includes a CPU module 12, a first digital pulse module 14, a first ultrasonic unit, and a plurality of digital pulse transmission modules arranged in parallel;
the slave sensors 20 include a second digital pulse module 24 and a second ultrasonic unit;
the plurality of digital pulse transmission modules are respectively in communication with the first digital pulse module 14 and the second digital pulse module 24 by means of bidirectional transmission; the CPU module 12 transmits a digital pulse signal to the first digital pulse module 14 and a plurality of second digital pulse modules 24 through the digital pulse transmission modules respectively, and the digital pulse signal is input to the first ultrasonic unit by the first digital pulse module 14, and is input to the second ultrasonic unit by the second digital pulse module 24; and
analog signals used by the first ultrasonic unit and the second ultrasonic unit are respectively converted into return digital pulse signals by the first digital pulse module 14 and the second digital pulse module 24, the return digital pulse signals are input to the CPU module by the corresponding digital pulse transmission module, and the CPU module 12 respectively calculates measurement results of distances from the main sensor 10 and the plurality of slave sensors to a corresponding measured object.

Further, a CCP module is arranged in the CPU module, and some pin of the CCP module sends the digital pulse signal to the outside.

Further, the return digital pulse signals are transmitted to the CPU module after being input to the corresponding pin of the CCP module.

Further, a detection control and communication module 18 is arranged in the main sensor, and the detection control and communication module 18 is externally connected with a switch and a switch indicator light of the parking radar system.

Further, an LIN/CAN bus communication interface module is arranged in the detection control and communication module 18 to implement the communication between the radar system and a vehicle-mounted bus module.

Further, the detection control and communication module 18 is directly connected with a buzzer, and can drive the buzzer to perform audible alarm prompt.

Further, the main sensor 10 is arranged on a rear bumper of a vehicle.

Further, the first ultrasonic unit includes a first ultrasonic emission module 15, a first ultrasonic sensor 16 and a first ultrasonic receiving module 17.

Further, after being simply amplified by the digital pulse transmission modules and the first digital pulse module 14, the digital pulse signal is input to the first ultrasonic emission module 15, and the first ultrasonic emission module 15 drives the first ultrasonic sensor 16 to work after performing boosting amplification on the signal.

Further, the first ultrasonic sensor 16 emits ultrasonic waves, the first ultrasonic receiving module 17 receives and amplifies an analog signal reflected by the object, and the amplified analog signal is input to the first digital pulse module 14 and converted into the return digital pulse signal.

Further, the second ultrasonic unit includes a second ultrasonic emission module 25, a second ultrasonic sensor 26 and a second ultrasonic receiving module 27.

Further, the digital pulse signal is input to the second ultrasonic emission module 25 after being simply amplified by the digital pulse transmission modules and the second digital pulse module 24, and the second ultrasonic emission module 25 drives the second ultrasonic sensor 26 to work after performing boosting amplification on the signal.

Further, the second ultrasonic sensor 26 emits ultrasonic waves, the second ultrasonic receiving module 27 receives and amplifies the analog signal reflected by the object, and the amplified analog signal is input to the second digital pulse module 24 and is converted into the return digital pulse signal.

Further, power supply modules are arranged in the main sensor and the plurality of the slave sensors.

In the present invention, the main sensor is provided with the CPU module, but none of the slave sensors has the CPU module, so that the cost of the system is greatly reduced. The main sensor communicates with the slave sensors by using digital pulse signals, so that the system works more reliably and stably.

### Brief Description of the Drawings

Fig. 1 is a block diagram of a structure principle of a conventional host parking radar;

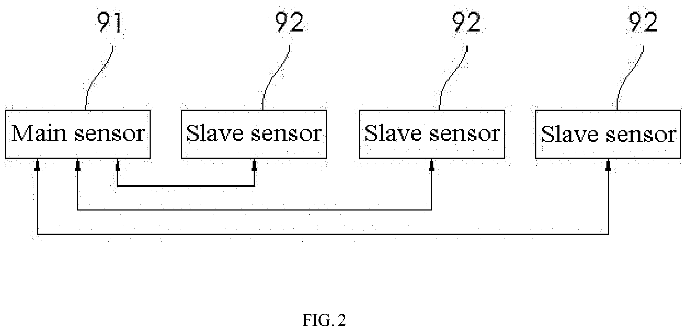

Fig. 2 is a block diagram of a structure principle of a hostless parking radar;

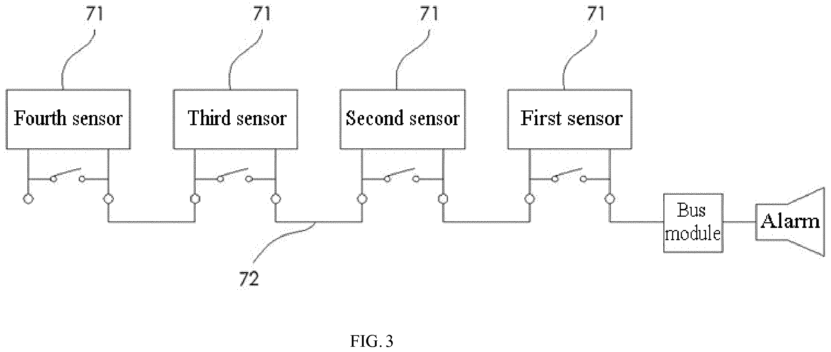

Fig. 3 is a block diagram of a structure principle of a hostless parking radar;

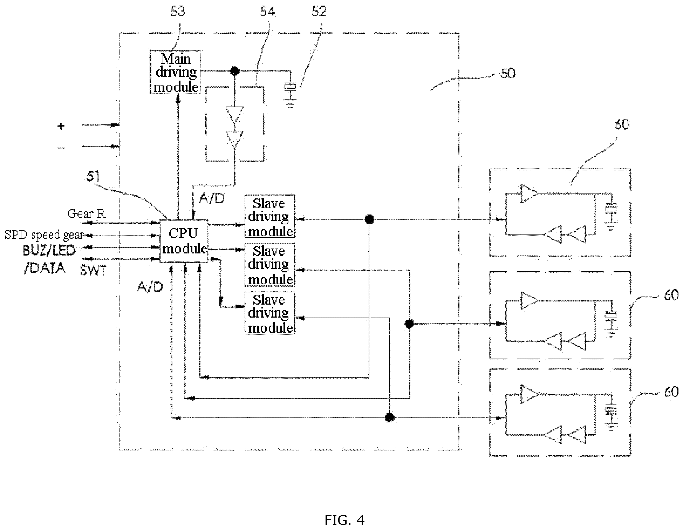

Fig. 4 is a block diagram of an internal structure principle of a hostless parking radar;
Fig. 5 is a block diagram of an internal structure principle of a hostless parking radar in the present invention;
Fig. 6 is an internal electrical schematic diagram of a power supply module;
Fig. 7 is an internal electrical schematic diagram of a CPU module;
Fig. 8 is an internal electrical schematic diagram of a digital pulse transmission module;
Fig. 9 is an internal electrical schematic diagram of a detection control and communication module;
Fig. 10 is an internal electrical schematic diagram of a digital pulse module, an ultrasonic emission module, an ultrasonic sensor and an ultrasonic receiving module;
Fig. 11 is an internal electrical schematic diagram of a slave sensor of a hostless parking radar in the present invention.

### Detailed Description of the Invention

The present invention is described more fully hereinafter with reference to the drawings, in which exemplary embodiments of the present invention are shown. However, the present invention may be embodied in many different forms and should not be construed as being limited to the exemplary embodiments described herein. Rather, these embodiments are provided so that the present disclosure is thorough and complete, and the scope of the present invention is completely conveyed to those of ordinary skill in the art.

For ease of explanation, spatial relative terms such as "upper", "lower", "left" and "right" and the like may be used herein to describe the relationship of one element or feature relative to another element or feature shown in the figure. It should be understood that the spatial terms are intended to encompass different orientations of the device in use or operation, in addition to the orientations shown in the figures. For example, if the device in the figure is inverted, and is stated as an element located "below" other elements or features are positioned "above" the other elements or features. Therefore, the exemplary term "lower" can include upper and lower sides. The device may be located in other manners (being rotated 90 degrees or located in other orientations), which can be correspondingly explained by the spatial relative illustration used herein.

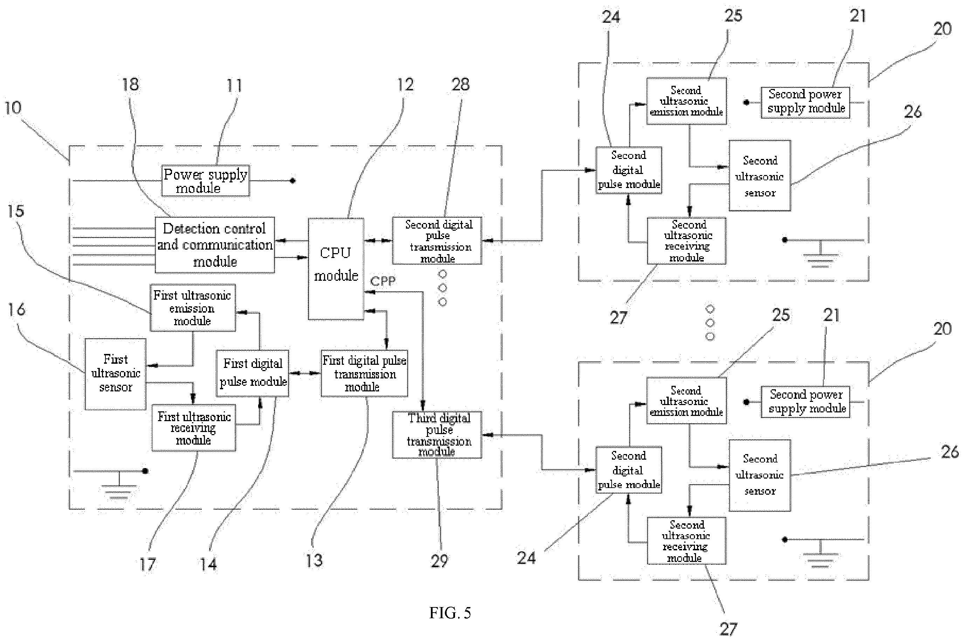

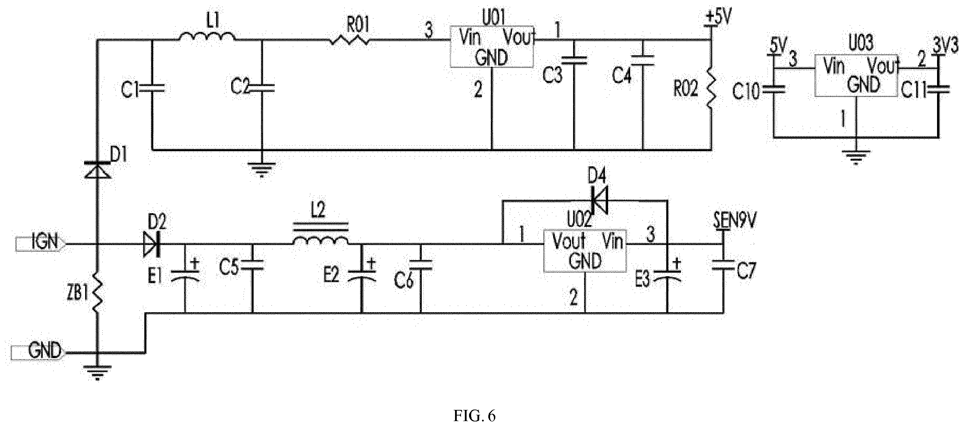

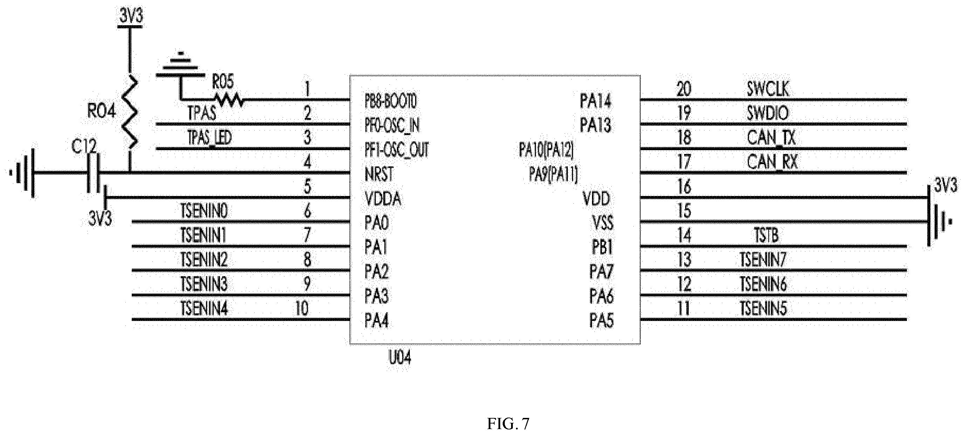

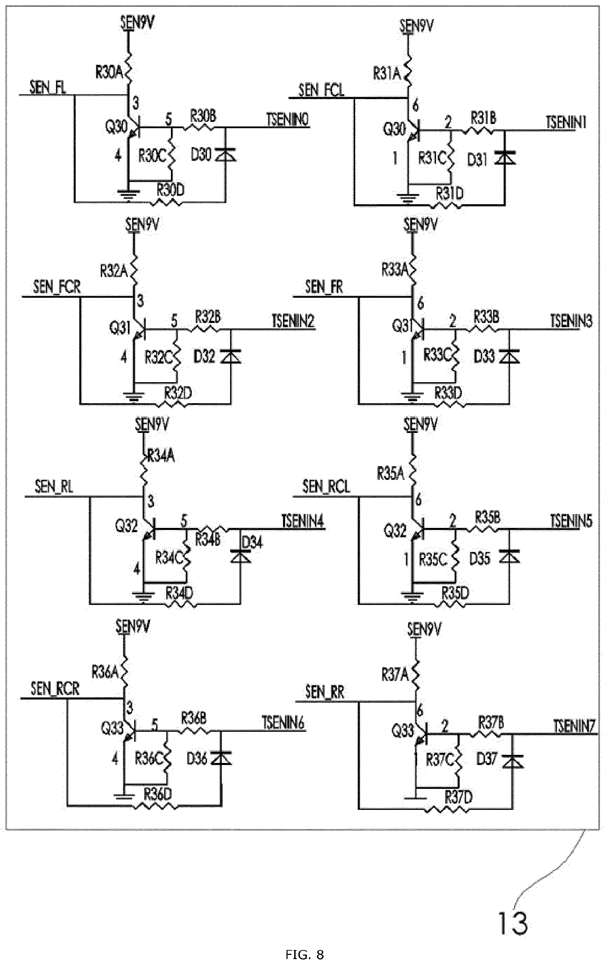

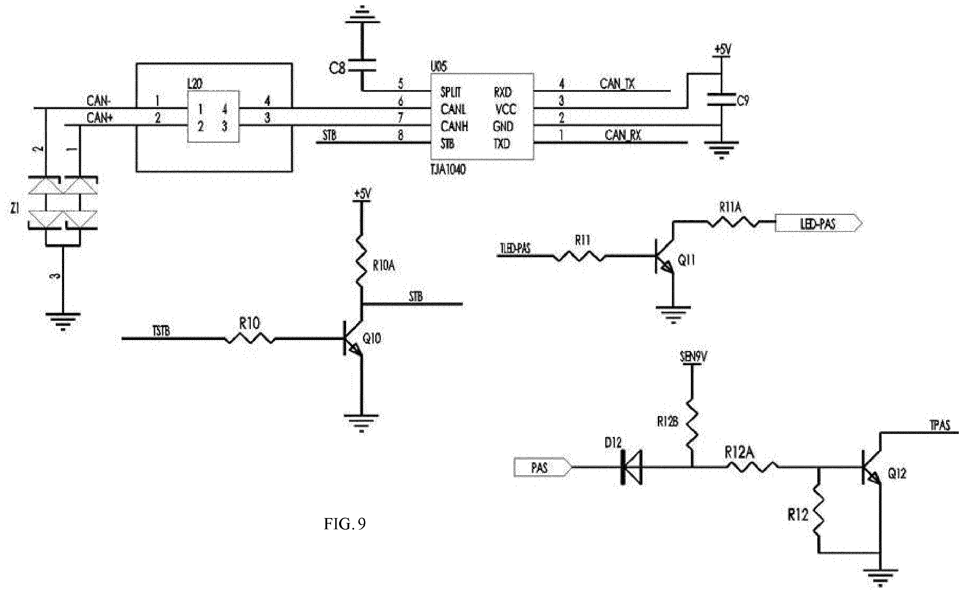

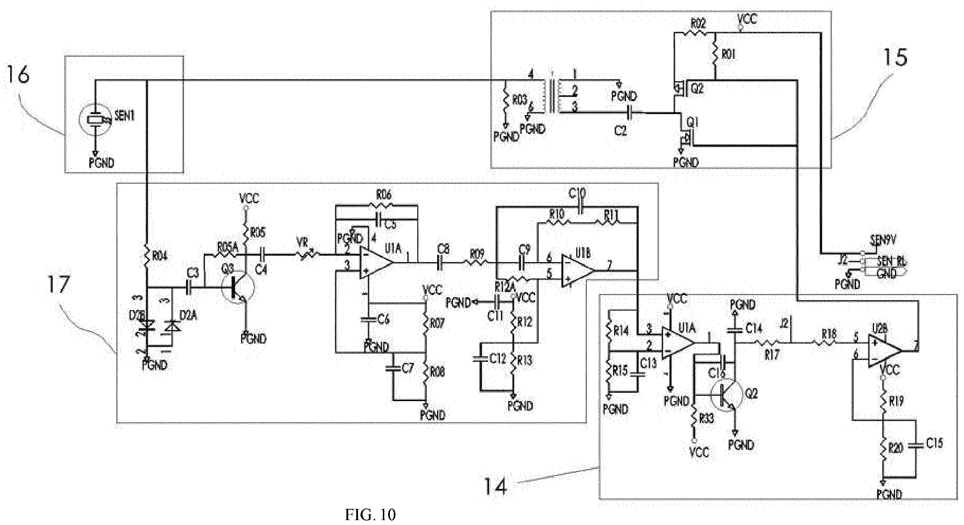

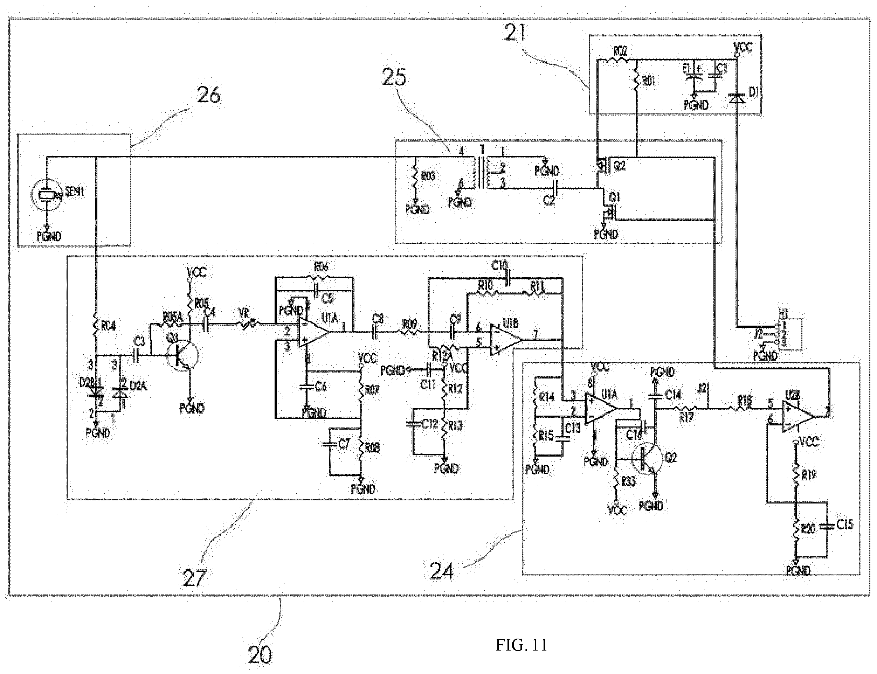

As shown in Fig. 5 to Fig. 11, the present invention provides a hostless parking radar system, including a main sensor and a plurality of slave sensors arranged in parallel.

The main sensor 10 includes a first power supply module 11, a CPU module 12, a plurality of digital pulse transmission modules, a first digital pulse module 14, a first ultrasonic emission module 15, a first ultrasonic sensor 16, a first ultrasonic receiving module 17, and a detection control and communication module 18.

The number of the plurality of digital pulse transmission modules can be set according to use requirements, each slave sensor 20 corresponds to a digital pulse transmission module, the plurality of digital pulse transmission modules include a first digital pulse transmission module 13, and multiple digital pulse transmission modules set according to the number requirements of the slave sensors 20. In the present embodiment, a second digital pulse transmission module 28 and a third digital pulse transmission module 29 are respectively provided corresponding to two slave sensors 20. In actual use, if N slave sensors 20 are provided, (N+1) digital pulse transmission modules are arranged in the main sensor 10.

The slave sensor 20 includes a second power supply module 21, a second digital pulse module 24, a second ultrasonic emission module 25, a second ultrasonic sensor 26, and a second ultrasonic receiving module 27. Each slave sensor 20 is a digital probe without a CPU.

The detection working process of the main sensor 10 for an obstacle is as follows:
1) The CPU module 12 of the main sensor 10 is a control core, a CCP module is arranged in the CPU module 12, and some pin of the CCP module sends a digital pulse signal;
2) The digital pulse signal is input to the first ultrasonic emission module 15 after being simply amplified by the first digital pulse transmission module 13 and the first digital pulse module 14;
3) The first ultrasonic emission module 15 drives the first ultrasonic sensor 16 to work after performing boosting amplification on the signal;
4) The first ultrasonic sensor 16 emits ultrasonic waves, and the first ultrasonic receiving module 17 receives and amplifies an analog signal reflected by an object and generated by the first ultrasonic sensor 16;
5) The amplified analog signal is input to the first digital pulse module 14, and the first digital pulse module 14 converts the same into a return digital pulse signal; and
6) The return digital pulse signal is input to a corresponding pin of the CCP module of the CPU module 12 via the first digital pulse transmission module 13, and the CPU module 12 calculates a measurement result of the distance from the main sensor 10 to the object.

The detection working process of the salve sensor 20 for the obstacle is as follows:
1) The CPU module 12 of the main sensor 10 is the control core, and some pin of the CCP module of the CPU module 12 sends a digital pulse signal;
2) The digital pulse signal is respectively input to a second digital pulse module 24 of one slave sensor 20 via the second digital pulse transmission module 28 and the third digital pulse transmission module 29 of the main sensor 10, and is input to the second ultrasonic emission module 25 after being simply amplified;
3) The second ultrasonic emission module 25 drives the second ultrasonic sensor 26 to work after performing boosting amplification on the signal;
4) The second ultrasonic sensor 26 emits ultrasonic waves, and the second ultrasonic receiving module 27 receives and amplifies the analog signal reflected by the object and generated by the second ultrasonic sensor 26;
5) The amplified analog signal is input to the second digital pulse module 24, and the second digital pulse module 24 converts the same into a return digital pulse signal; and
6) The return digital pulse signal of the slave sensors 20 is input to the CCP module of the CPU module 12 via the second digital pulse transmission module 28 and the third digital pulse transmission module 29 of the main sensor 10, and the CPU module 12 calculates the measurement result of the distance from the slave sensor 10 to the object.

The main sensor 10 and each of the slave sensors 20 are connected by a single conducting wire and perform bidirectional digital pulse transmission, the main sensor side of the conducting wire is connected to one digital pulse transmission module of the main sensor 10, and the slave sensors side of the conducting wire is connected to the second digital pulse module 24 of the slave sensors 20. Different slave sensors 20 communicate with the main sensor 10 by means of bidirectional transmission through different single conducting wires, and the transmitted signals are digital pulse signals instead of analog signals, so the slave sensors are digital probes instead of analog probes.

At the same time, the main sensor 10 performs transmission output and input detection of ultrasonic digital pulse signals on the sensors through independent pins of the CCP module of the CPU module 12, the CCP module has a high response speed, and has a higher signal processing efficiency than an A/D module, therefore a plurality of sensors can be simultaneously controlled to perform transmission, and the plurality of sensors can also be simultaneously controlled to receive the signals. Accordingly, the main sensor 10 can not only control the respective sensors to perform time-division polling operation according to a time sequence so as to realize respective distance detection functions of the sensors, but also can control multiple of these sensors to work at the same time and to perform object detection in a working mode of one-transmission multiple-reception or multiple-transmission multiple-reception, so as to achieve triangulation location measurement and calculation functions of the radar system.

The main sensor 10 is provided with the detection control and communication module 18, which is externally connected with a switch and a switch indicator light of the parking radar system, and is internally connected with the CPU module 12. When the parking radar system needs to be turned on or off, the operation can be performed through the switch, the operation result state is provided by the switch indicator light, and the switch signal detection and indicator light drive control are finally judged and processed by the CPU module 12.

The detection control and communication module 18 is also provided with an LIN/CAN bus communication interface module to realize communication between the radar system and a vehicle-mounted bus module, the system can obtain signals such as vehicle speed, temperature, gear and the like through the bus module, and can also transmit the distance detection result data of the system and the state information data of the sensors and the like, so that the vehicle-mounted bus module such as a vehicle instrument or a central control host to receive and process the data, for example, radar detection result information is displayed on a display screen of the vehicle-mounted central control host, for example, audible alarm prompt is performed through the instrument, and so on.

The detection control and communication module 18 can be directly connected with a buzzer and drive the buzzer to perform audible alarm prompt. For a simple reversing radar system that only needs an audible alarm function, the main sensor 10 can directly drive the buzzer to work, and the system has a strong cost advantage on a part of low-end vehicles.

Further, in the present invention, the main sensor 10 is arranged on a rear bumper of the vehicle. When the vehicle is only provided with a reversing sensor (rear parking) function, the main sensor 10 is arranged at the rear of the vehicle, or the main sensor 10 and the plurality of slave sensors 20 are arranged at the rear of the vehicle; when the vehicle requires a front and rear radar (front and rear parking) function, on the basis of the original arrangement, the slave sensors 20 are further arranged on the front bumper and on the side of the vehicle in the system; and since the main sensor 10 is arranged at the rear of the vehicle, the expandability of the radar system is good. Meanwhile, the electrical equipment at the front of the vehicle is more disturbing than the rear of the vehicle, and the environment is complicated, therefore, the main sensor 10 with more CPU circuit modules is arranged at the rear of the vehicle, so that the working environment of the system is better, and the working stability is better. The above innovation of the hostless parking radar system of the present invention overcomes various defects of all other main-slave hostless parking radar systems at present, and its comparative advantages are summarized as follows:
First, the main sensor is provided with the CPU module, but none of the slave sensors has the CPU module (microprocessor), so that the cost of the system is greatly reduced.

Second, the main sensor communicates with the slave sensors by using digital pulse signals instead of analog signals, so that the anti-interference ability of the system is very high, and especially when the sensors are arranged on the front and rear bumpers of the vehicle, the system works more reliably and stably.

Third, the main sensor performs the transmission output and input detection of the ultrasonic digital pulse signals on the sensors through the CCP module of the CPU module, since the CCP module has high processing efficiency, the working efficiency of the system is greatly improved, accordingly, the triangulation location measurement and calculation functions of the system can be conveniently implemented. Meanwhile, as the CPU module uses a CCP mode for multiple channels instead of an A/D mode, so that the cost of the main sensor is also reduced to a certain extent.

The hostless parking radar system of the present invention is generally configured with one main sensor and 1 to 11 slave sensors, and the larger the number of the slave sensors configured in the system is, the more obvious the cost performance advantage of the system in the present invention is.

## Claims

1. A hostless parking radar system, comprising a main sensor and a plurality of slave sensors arranged in parallel, wherein,
the main sensor comprises a CPU module, a first digital pulse module, a first ultrasonic unit, and a plurality of digital pulse transmission modules arranged in parallel;
the slave sensors comprise a second digital pulse module and a second ultrasonic unit; and
the plurality of digital pulse transmission modules are respectively in communication with the first digital pulse module and the second digital pulse module by means of bidirectional transmission; the CPU module transmits a digital pulse signal to the first digital pulse module and a plurality of second digital pulse modules through the digital pulse transmission modules respectively, and the digital pulse signal is input to the first ultrasonic unit by the first digital pulse module, and is input to the second ultrasonic unit by the second digital pulse module; and
analog signals used by the first ultrasonic unit and the second ultrasonic unit are respectively converted into return digital pulse signals by the first digital pulse module and the second digital pulse module, the return digital pulse signals are input to the CPU module by the corresponding digital pulse transmission module, and the CPU module respectively calculates measurement results of distances from the main sensor and the plurality of slave sensors to a corresponding measured object.

2. The hostless parking radar system according to claim 1, wherein, a CCP module is arranged in the CPU module, and one pin of the CCP module sends the digital pulse signal to the outside.

3. The hostless parking radar system according to claim 2, wherein, the return digital pulse signals are transmitted to the CPU module after being input to the corresponding pin of the CCP module.

4. The hostless parking radar system according to claim 1, wherein, a detection control and communication module is arranged in the main sensor, and the detection control and communication module is externally connected with a switch and a switch indicator light of the parking radar system.

5. The hostless parking radar system according to claim 4, wherein, an LIN/CAN bus communication interface module is arranged in the detection control and communication module to implement the communication between the radar system and a vehicle-mounted bus module.

6. The hostless parking radar system according to claim 4, wherein, the detection control and communication module is directly connected with a buzzer, and can drive the buzzer to perform audible alarm prompt.

7. The hostless parking radar system according to claim 1, wherein, the main sensor is arranged on a rear bumper of a vehicle.

8. The hostless parking radar system according to claim 1, wherein, the first ultrasonic unit comprises a first ultrasonic emission module, a first ultrasonic sensor and a first ultrasonic receiving module.

9. The hostless parking radar system according to claim 8, wherein, the digital pulse signal is input to the first ultrasonic emission module after being simply amplified by the digital pulse transmission modules and the first digital pulse module, and the first ultrasonic emission module drives the first ultrasonic sensor to work after performing boosting amplification on the signal.

10. The hostless parking radar system according to claim 9, wherein, the first ultrasonic sensor emits ultrasonic waves, the first ultrasonic receiving module receives and amplifies the analog signal reflected by the object, and the amplified analog signal is input to the first digital pulse module and is converted into the return digital pulse signal.

11. The hostless parking radar system according to claim 1, wherein, the second ultrasonic unit comprises a second ultrasonic emission module, a second ultrasonic sensor and a second ultrasonic receiving module.

12. The hostless parking radar system according to claim 11, wherein, the digital pulse signal is input to the second ultrasonic emission module after being simply amplified by the digital pulse transmission modules and the second digital pulse module, and the second ultrasonic emission module drives the second ultrasonic sensor to work after performing boosting amplification on the signal.

13. The hostless parking radar system according to claim 12, wherein, the second ultrasonic sensor emits ultrasonic waves, the second ultrasonic receiving module receives and amplifies the analog signal reflected by the object, and the amplified analog signal is input to the second digital pulse module and is converted into the return digital pulse signal.

14. The hostless parking radar system according to claim 1, wherein, power supply modules are arranged in the main sensor and the plurality of the slave sensors.
